# EUROPÄISCHE PATENTANMELDUNG

(11) **EP 4 763 623 A1**
(43) Veröffentlichungstag der Anmeldung: **24.06.2026**
(21) Anmeldenummer: 25211848.4
(22) Anmeldetag: 28.10.2025
(51) Int. Cl.: B60R 3/02, B61D 23/02

(54) **TÜRFLÜGEL MIT INTEGRIERTER KLAPPSTUFE FÜR EIN FAHRZEUG**

(30) Priorität: 23.12.2024 DE 202024107554 U; 22.07.2025 DE 202025104231 U
(71) Anmelder: Bode - Die Tür GmbH, 34123 Kassel (DE)
(72) Erfinder: Rasekhi Coochesfahani, Diako, 34128 Kassel (DE)
(74) Vertreter: Patentanwälte Bauer Vorberg Kayser

(57) **Zusammenfassung**

Die vorliegende Erfindung betrifft ein Türsystem 20 mit einem Türflügel 24 für ein Fahrzeug 22. Dieses ist gekennzeichnet durch eine integrierte Klappstufe 26, wobei die Klappstufe 26 ein Flächenelement 28 aufweist, das im ausgeklappten Zustand eine Trittfläche 30 und im eingeklappten Zustand der Klappstufe 26 einen Bereich des Türflügels 24 ausbildet.

## Beschreibung

Die vorliegende Offenbarung bezieht sich auf ein System und ein Verfahren zur Integration einer Klappstufe in einen Türflügel für Fahrzeuge. Insbesondere bezieht sich die vorliegende Offenbarung auf einen Türflügel, der eine Klappstufe umfasst, die im ausgeklappten Zustand als Trittfläche und im eingeklappten Zustand als Teil des Türflügels dient.

Auf dem Gebiet der Fahrzeugtüren ist es üblich, dass diese lediglich als einfache Barrieren zwischen dem Innenraum eines Fahrzeugs und der Außenwelt dienen. Bekannte Systeme umfassen typischerweise starre Türflügel, die entweder manuell oder automatisch geöffnet und geschlossen werden können. Diese Türflügel bieten zwar grundlegende Funktionen wie Schutz vor Witterungseinflüssen und Zugangskontrolle, jedoch gibt es immer wieder Situationen, in denen zusätzliche Funktionen wünschenswert wären. Insbesondere bei Fahrzeugen, die häufig von Personen mit eingeschränkter Mobilität genutzt werden, besteht ein Bedarf an zusätzlichen Hilfsmitteln, die den Ein- und Ausstieg erleichtern.

Gemäß bekannter Technik werden solche Hilfsmittel oft als separate Einheiten konzipiert, die nachträglich an das Fahrzeug angebracht werden müssen. Diese separaten Einheiten umfassen beispielsweise Trittstufen oder Rampen, die entweder manuell ausgeklappt oder durch ein separates Antriebssystem betätigt werden. Der Nachteil dieser Lösungen besteht darin, dass sie zusätzlichen Platz beanspruchen und das Fahrzeugdesign beeinträchtigen können. Zudem erfordern sie oft eine aufwändige Installation und Wartung, was die Betriebskosten erhöht und die Zuverlässigkeit beeinträchtigen kann.

Trotz der beträchtlichen Fortschritte auf dem Gebiet der Fahrzeugzugangssysteme besteht nach wie vor ein Bedarf an integrierten Lösungen, die sowohl funktional als auch ästhetisch ansprechend sind. Eine der Herausforderungen besteht darin, eine Lösung zu entwickeln, die nahtlos in das bestehende Fahrzeugdesign integriert werden kann, ohne dass zusätzliche Komponenten sichtbar sind oder den Platz im Innenraum beeinträchtigen. Darüber hinaus sollte die Lösung robust und zuverlässig sein, um den Anforderungen des täglichen Gebrauchs standzuhalten, und gleichzeitig einfach zu bedienen sein, um den Komfort für die Nutzer zu maximieren.

Das Dokument DE20 113 258 U1 beschreibt eine Klapptreppe für Wohnwagen oder -mobile die unterhalb einer Türöffnung des Fahrzeugs lösbar eingehängt werden kann. Die Treppe besteht aus mehreren horizontalen Trittstufen, die über Verbindungselemente gelenkig miteinander verbunden sind. Die Treppe kann zwischen einer ausgeklappten Gebrauchsstellung und einer eingeklappten, Transportstellung verstellt werden. Die Verbindungselemente sind durch zwei Paare von parallelen Seitenholmen gebildet, die eine gelenkige Parallelogrammanordnung bilden und durch eine Verriegelungseinrichtung in vorgebbaren Stellungen festgelegt werden können. Die Klapptreppe benötigt zusätzlichen Platz unterhalb der Türöffnung, was die Bodenfreiheit des Fahrzeugs beeinträchtigen kann.

Das Dokument DE10 2008 057 537 A1 betrifft eine schwenkbare Trittstufe, die an einem Transportmittel-Einstieg angelenkt ist. Der Einstieg wird durch eine gestufte Ausnehmung im Fahrzeugboden gebildet und hat eine immobile Trittstufe. Die schwenkbare Trittstufe umfasst ein Trittbrett und einen Rückwandabschnitt, der an der Längskante des Trittbretts angeordnet ist. Die Trittstufe kann von einer Gebrauchsstellung in eine Nichtgebrauchsstellung geschwenkt werden, sodass die Unterseite der Trittstufe in der Nichtgebrauchsstellung mit dem Fahrzeugboden flächenbündig abschließt. Die schwenkbare Trittstufe ist auf eine gestufte Ausnehmung im Fahrzeugboden angewiesen, was die Anwendungsmöglichkeiten einschränkt

Das DE 10 2013 014 906 A1 zeigt eine Klapptreppenkonstruktion für ein Kraftfahrzeug, insbesondere einen Omnibus. Die Konstruktion umfasst eine Klapptreppe und eine Montageeinrichtung, mit der die Klapptreppe am Fahrzeug montiert und geschwenkt werden kann. Die Klapptreppe besteht aus mindestens zwei Trittstufen, die über einen Treppenstufenversatz miteinander verbunden sind. Die Klapptreppe kann von einem eingeschwenkten Zustand, in dem sie die Funktion der Einstiegstreppe übernimmt, in einen ausgeschwenkten Zustand gebracht werden, um den Einstieg zu erleichtern. Die Montageeinrichtung für die Klapptreppe ist aufwendig und kostenintensiv.

Es ist Aufgabe der vorliegenden Erfindung ein verbessertes Zugangssystem für Fahrzeuge bereitzustellen, welche die Nachteile bekannter Systeme zumindest teilweise überwindet. Insbesondere soll der Aufbau relativ einfach, aber trotzdem widerstandsfähig sein.

Erfindungsgemäß wird die Aufgabe durch ein Türsystem mit den Merkmalen des Patentanspruchs 1 gelöst.

Das erfindungsgemäße Türsystem weist demnach einen Türflügel für ein Fahrzeug auf mit einer integrierten Klappstufe auf. Die Klappstufe weist wiederum ein Flächenelement auf, das im ausgeklappten Zustand eine Trittfläche und im eingeklappten Zustand einen Bereich des Türflügels ausbildet.

Der Türflügel ist also aus einem üblichen flächigen Türelement und einem weiteren Flächenelement gebildet, welches im ausgeklappten Zustand die Trittstufe ausbildet. Im geschlossenen Zustand bilden also das flächige Türelement und das Flächenelement der Trittstufe gemeinsam den Türflügel aus. In einer besonders bevorzugten Ausführungsform bildet das Flächenelement im eingeklappten Zustand einen in Bezug auf einen Untergrund unteren Bereich des Türflügels aus, beispielsweise 10 % bis 40 % der Höhe des Türelements, vorzugsweise 15 % bis 30 %

Grundsätzlich ist es möglich, eine manuell zu bewegende Klappstufe vorzusehen, die keinen Antrieb für die Bewegung aufweist. Vorzugsweise ist aber ein Antriebssystem vorgesehen, welches die Klappstufe, also ein Ein- und Ausklappen des Flächenelementes antreibt. Das Antriebssystems vorzugsweise elektrisch angetrieben und weist dafür einen entsprechend ausgelegten und geeigneten Elektromotor auf.

In einer besonders vorteilhaften Ausführungsvariante ist das Antriebssystem bzw. sind dessen Komponenten im eingeklappten Zustand der Klappstufe, also bei geschlossener Tür, innerhalb des Fahrzeugs angeordnet.

Ein Haltesystem für die Klappstufe umfasst vorzugsweise zwei gelenkig miteinander verbundene Hebel, von denen ein erster Hebel endseitig schwenkbar mit dem Fahrzeug und mit seinem anderen Ende gelenkig mit dem zweiten Hebel verbunden ist, wobei der zweite Hebel mit seinem dem ersten Hebel abgewandten anderen freien Ende schwenkbar mit einer Trittfläche verbunden ist.

Vorzugsweise kann vorgesehen sein, dass zwei Haltesysteme vorgesehen sind, die beidseitig seitlich des Flächenelementes mit diesem und dem Fahrzeug verbunden sind. Die beiden Haltesysteme können durch einen einzigen Elektromotor gemeinsam oder jeweils durch einen eigenen Antriebsmotor angetrieben werden.

Vorteilhafterweise können die Hebel über ein gemeinsames Gelenk miteinander verbunden sein, welches die Bewegungen der Hebel bzw. der beiden Parallelarm-Systeme steuert und synchronisiert. Das Gelenk kann in einer besonderes bevorzugten Ausführungsvariante als eine Art Kurbelgetriebe ausgeführt sein. Der Antrieb der Klappstufe kann vorzugsweise über das Gelenk erfolgen. Ein dafür notwendiger und mit dem Gelenk verbundener Motor ist vorzugsweise im eingeklappten Zustand der Klappstufe, also bei geschlossener Tür, innerhalb des Fahrzeugs angeordnet.

Die beiden Haltesysteme weisen in einer besonderes vorteilhaften Ausführungsvariante jeweils zwei Hebelpaare auf, die jeweils mit dem Flächenelement und dem Fahrzeug verbunden sind. An der Trittfläche ist je Haltesystem ein erstes Befestigungstrapez angeordnet, welches eine schräg zur Trittfläche verlaufende erste Befestigungsseite aufweist, an der die beiden Hebel des Haltesystems nebeneinander angelenkt sind. Auf diese Weise ist die Trittstufe im ausgeklappten Zustand sicher in der Horizontalen gehalten.

Fahrzeugseitig ist je Haltesystem ein zweites Befestigungstrapez angeordnet, welches eine schräg zur ausgeklappten Trittfläche verlaufende zweite Befestigungsseite aufweist, an der die beiden anderen Hebel des Haltesystems nebeneinander angelenkt sind.

Die ersten und zweiten Befestigungsseiten schließen im eingeklappten Zustand der Trittfläche vorzugsweise einen Winkel von 60° bis 120°, vorzugsweise 90°, ein.

Die Position des ausgeklappten Flächenelementes bzw. der ausgeklappten Trittfläche ist über geeignete Einstellelemente in X-, Y- und Z-Richtung leicht veränderbar. Die Einstellelemente können beispielsweise durch die Haltesysteme selbst gebildet sein. Denkbar sind aber auch andere geeignete Einstellelemente, wie beispielsweise Langlöcher oder rastende, ineinander verzahnte Drehscheiben.

Eine Höhendifferenz des ausgeklappten Flächenelementes in Bezug auf einen Fahrzeugboden innerhalb des Fahrzeugs bzw. zum Bahnsteig kann vorzugsweise über unterschiedliche Winkel der Hebel der Haltesysteme zueinander und/oder zum Fahrzeug verändert werden. Auch eine Neigung der Trittfläche bzw. des ausgeklappten Flächenelementes gegenüber einer horizontalen Ebene ist vorzugsweise veränderbar.

Besonders vorteilhaft ist, dass das Flächenelement im eingeklappten Zustand als Verschlusselement wirken den Türflügel in einer Türöffnung halten und verschließen kann. Dazu kann das Flächenelement im eingeklappten Zustand beispielsweise an einer Außenseite des oberen anderen flächigen Türelements anliegen und dieses in Öffnungsrichtung blockieren.

Die nachfolgenden Figuren zeigen das grundsätzliche Funktionsprinzip und den Aufbau eines erfindungsgemäßen Türsystems in stark vereinfachten Prinzipdarstellung ein. Die gezeigten Elemente sind nicht maßstabsgetreu, für die Erfindung unwesentliche Bauteile sind nicht dargestellt. Die Erfindung soll nicht auf das gezeigte Ausgangsbeispiel beschränkt sein, vielmehr umfasst die Erfindung auch weitere Ausführungsvarianten der grundsätzlichen Idee, Änderungen an diesen Ausführungsformen sind möglich, ohne den Schutzbereich der vorliegenden Erfindung zu verlassen. Es zeigen:
- Fig. 1:: ein Türsystem mit geschlossenem und verriegeltem Türflügel im Schnitt von der Seite,
- Fig. 2:: das Türsystem aus Fig. 1 im Schnitt von der Seite mit teilweise ausgeklappter Klappstufe,
- Fig. 3:: das Türsystem aus Fig. 1 im Schnitt von der Seite mit ausgeklappter Klappstufe.

Die Figuren zeigen jeweils eine schematische und stark vereinfachte Darstellung eines erfindungsgemäßen Türsystems 20 für ein Fahrzeug 22, beispielsweise ein Schienenfahrzeug. Angedeutet sind ein Fahrzeugrad 21, das auf einen Schiene 23 abrollt. Das Türsystem 20 weist einen Türflügel 24 auf, der eine Türöffnung verschließt. Der Türflügel 24 weist eine integrierte Klappstufe 26 auf, welche ein Flächenelement 28 aufweist, das im ausgeklappten Zustand eine Trittfläche 30 und im eingeklappten Zustand der Klappstufe 26 einen Bereich des Türflügels 24 aufweist.

Der Türflügel 24 ist somit im Wesentlichen aus zwei Elementen gebildet, nämlich dem Flächenelement 28 und einem weiteren Flächenelement 32, welches dem restlichen Türflügel entspricht. Im gezeigten Ausführungsbeispiel bildet das Flächenelement 28 der Klappstufe 26 einen unteren, einem Untergrund oder Bahnsteig 38 zugewandten Bereich des Türflügels 24 aus.

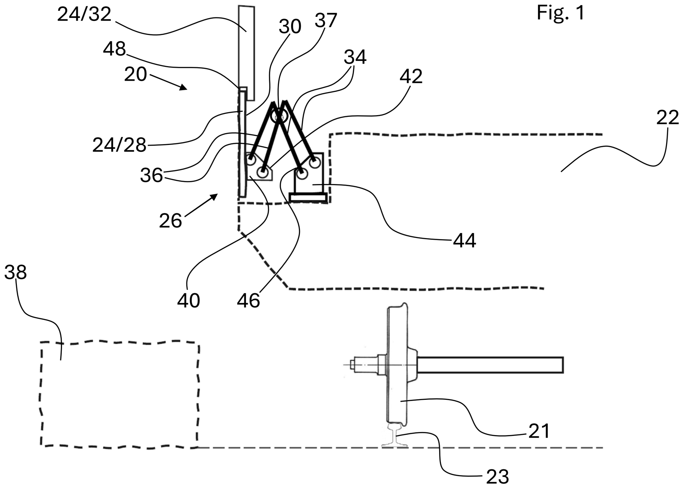

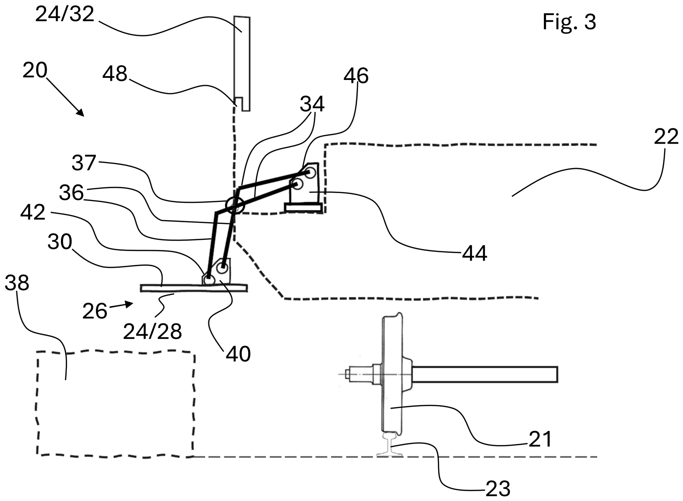

Das Flächenelement 28 bildet mit seiner im geschlossenen Zustand einem Fahrzeuginnern zugewandten Seite die Trittfläche 30 und mit seiner im geschlossenen Zustand nach außen weisenden Seite einen Bereich einer Außenseite des Türflügels 24 aus (siehe Figuren 1 und 3).

Das Flächenelement 28 ist im gezeigten Ausführungsbeispiel in horizontaler Ebene beidseitig über jeweils gelenkig miteinander verbundene Hebel 34, 36, die ein Haltesystem ausbilden, mit dem Fahrzeug 22 verbunden. Ein erster Hebel 34 ist endseitig mit dem Fahrzeug 22 und mit seinem anderen Ende mit dem zweiten Hebel 36 verbunden, der zweite Hebel 36 ist mit seinem dem ersten Hebel 34 abgewandten anderen freien Ende mit dem Flächenelement 28 verbunden ist. Ein nicht gezeigter elektrischer Motor dient zum Antrieb der Klappstufe 26, die Hebel 34, 36 und der Motor bilden dann gemeinsam ein Antriebssystem aus. Weiterhin können nicht gezeigte Sensoren vorgesehen sein, die einen Abstand zum Bahnsteig 38 überwachen.

In einer besonders vorteilhaften Ausführungsvariante ist der Abstand des als Trittfläche 30 dienenden Flächenelements 28 zum Bahnsteig 38 durch unterschiedliche Auslenkung der Hebel 34, 36 einstellbar. Möglich ist auch eine Anpassung des Flächenelement 28 bzw. Trittfläche 30 in Bezug auf eine Neigung zum Untergrund, wobei die Änderung der Neigung ebenfalls über die Hebel 34, 36 erfolgt. Die Hebel 34, 36 dienen also als Einstellelemente für die Ausrichtung der Klappstufe 26, denkbar sind aber auch andere geeignete und ggfs. zusätzliche Elemente

Am Flächenelement 28 bzw. der Trittfläche 30 ist jeweils für die zweiten Hebel 36 ein erstes Befestigungstrapez 40 vorgesehen, welches eine schräg zur Trittfläche verlaufende erste Befestigungsseite 42 aufweist, an der die beiden Hebel 36 des Antriebssystems in Richtung quer zum Fahrzeug 22 nebeneinander angelenkt sind.

Ein zweites Befestigungstrapez 44 ist am Fahrzeug 22 angeordnet und weist eine schräg zur ausgeklappten Trittfläche 30 verlaufende zweite Befestigungsseite 46 auf, an der die beiden ersten Hebel 34 nebeneinander angelenkt sind.

Vorteilhafterweise sind die Hebel 34, 36 über ein gemeinsames Gelenk 35 miteinander verbunden. Das Gelenk 37 steuert und synchronisiert die Bewegungen der Hebel 34, 36 bzw. der beiden Parallelarm-Systeme. Das Gelenk 37 kann in einer besonderes bevorzugten Ausführungsvariante als eine Art Kurbelgetriebe ausgeführt sein. Der Antrieb der Klappstufe 26 kann vorzugsweise über das Gelenk 37 erfolgen.

Die ersten und zweiten Befestigungsseiten 42, 46 schließen im eingeklappten Zustand der Klappstufe 26 einen Winkel von 60° bis 120°, vorzugsweise 70° bis 100° ein.

Die Figuren verdeutlichen auch, dass das Flächenelement 28 im geschlossenen Zustand der Klappstufe 26 mit seiner dem weiteren Flächenelement 32 zugewandten Seitenkante von außen an diesem anliegt und es somit in Öffnungsrichtung blockiert. Die Klappstufe 26 dient somit zusätzlich der Verriegelung des Türflügels 24 bzw. des weiteren Flächenelement 32. Im gezeigten Ausgangsbeispiel ist dafür eine Ausnehmung 48 im unteren, dem Flächenelement 28 zugewandten Bereich des weiteren Flächenelements 32 vorgesehen, in dem die entsprechende Seitenkante des Flächenelements 28 zur Anlage kommt. Dadurch ergibt sich eine durchgehend flache, bündige Außenseite des Türflügels 24, das Flächenelement 28 steht nicht gegenüber dem weiteren Flächenelement 32 vor.

Vorteilhafterweise sind das Antriebssystem und die kinematischen Komponenten der Klappstufe 26 innerhalb des Fahrzeugs 22 platziert und somit besser gegen Umwelteinflüsse und äußere Belastungen geschützt.

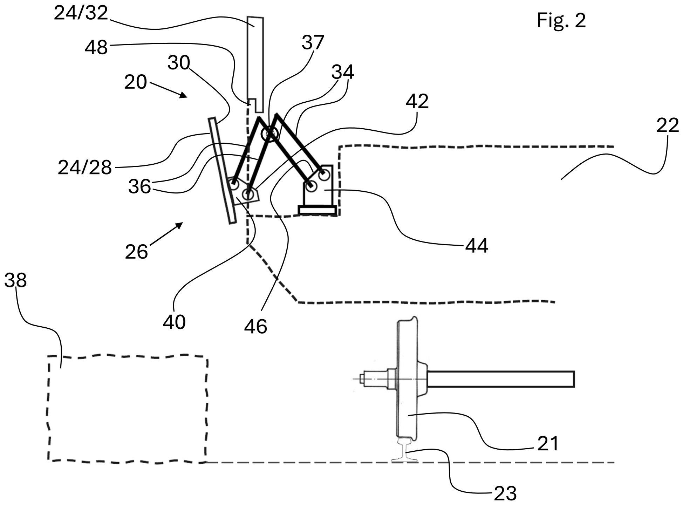

Die Figuren 1-3 zeigen das Aus- oder Einklappen der Klappstufe 26. In der ersten Phase ist der Türflügel 24 geschlossen und verriegelt. Die Klappstufe 26 ist in den Türflügel 24 integriert und befindet sich in der eingeklappten Position. In dieser Position bildet die Klappstufe 26 den unteren Bereich des Türflügels 24 aus und benötigt keinen zusätzlichen Einbauraum.

In der zweiten Phase bleibt der obere Bereich des Türflügels 24, als das weitere Flächenelement 32 weiterhin geschlossen, während die Klappstufe 26 ausklappt. Das Flächenelement 28 bewegt sich nach außen.

In der dritten Phase ist die Klappstufe 26 vollständig ausgeklappt. Der Türflügel 24, der in Figur 3 noch geschlossen dargestellt ist, kann geöffnet werden. Die Position der ausgeklappten Treppe kann in X-, Y- und Z-Richtung angepasst werden, um eine optimale Anpassung an den Bahnsteig oder den Einstiegsbereich des Fahrzeugs zu gewährleisten. Die Klappstufe 26 ist dann stabil und bereit für den Gebrauch.

Die Abbildungen verdeutlichen die Kinematik und die Funktionsweise der Klappstufe 26 in den verschiedenen Phasen des Betriebs. Die dargestellten Hebelmechanismen und Antriebssysteme sind so konzipiert, dass sie eine zuverlässige und robuste Lösung für den Zugang zu Fahrzeugen bieten, ohne zusätzlichen Einbauraum zu benötigen und gleichzeitig gegen äußere Einflüsse geschützt sind.

Die Konstruktion der Erfindung gewährleistet eine stabile und sichere Trittfläche 30 im ausgeklappten und eine zuverlässige Verschlussfunktion im eingeklappten Zustand der Klappstufe 26.

### Bezugsziffern

- 20: Türsystem
- 21: Fahrzeugrad
- 22: Fahrzeug
- 23: Schiene
- 24: Türflügel
- 26: Klappstufe
- 28: Flächenelement
- 30: Trittfläche
- 32: Weiteres Flächenelement
- 34: Erster Hebel
- 36: Zweiter Hebel
- 37: Gelenk
- 38: Bahnsteig
- 40: Erstes Befestigungstrapez
- 42: Erste Befestigungsseite
- 44: Zweites Befestigungstrapez
- 46: Zweite Befestigungsseite
- 48: Ausnehmung

## Patentansprüche

1. Türsystem (20) mit einem Türflügel (24) für ein Fahrzeug (22), **gekennzeichnet durch** eine integrierte Klappstufe (26), wobei die Klappstufe (26) ein Flächenelement (28) aufweist, das im ausgeklappten Zustand eine Trittfläche (30) und im eingeklappten Zustand der Klappstufe (26) einen Bereich des Türflügels (24) ausbildet.

2. Türsystem (20) nach Anspruch 1, **dadurch gekennzeichnet, dass** das Flächenelement (28) im eingeklappten Zustand einen in Richtung eines Fahrzeugbodens weisenden unteren Bereich des Türflügels (24) ausbildet.

3. Türsystem (20) nach Anspruch 1 oder Anspruch 2, **dadurch gekennzeichnet, dass** ein Haltesystem für ein Ein- und Ausklappen des Flächenelementes (28) vorgesehen ist.

4. Türsystem (20) nach Anspruch3, **dadurch gekennzeichnet, dass** das Haltesystem im eingeklappten Zustand der Klappstufe (26) innerhalb des Fahrzeugs (22) angeordnet ist.

5. Türsystem (20) nach Anspruch 4, **dadurch gekennzeichnet, dass** das Haltesystem zwei gelenkig miteinander verbundene Hebel (34, 36) aufweist, von denen ein erster Hebel (34) endseitig mit dem Fahrzeug (22) und mit seinem anderen Ende mit dem zweiten Hebel (36) verbunden, und der zweite Hebel (36) mit seinem dem ersten Hebel (34) abgewandten anderen freien Ende mit dem Flächenelement (28) verbunden ist.

6. Türsystem (20) nach einem der Ansprüche 3 bis 5, **dadurch gekennzeichnet, dass** zwei Haltesysteme vorgesehen sind, die beidseitig seitlich des Flächenelementes (28) mit diesem und dem Fahrzeug (22) verbunden sind.

7. Türsystem (20) nach Anspruch 6, **dadurch gekennzeichnet, dass** die beiden Haltesysteme jeweils zwei Hebelpaare (34, 36) aufweisen, die jeweils mit dem Flächenelement (28) und dem Fahrzeug (22) verbunden sind.

8. Türsystem (20) nach Anspruch 7, **dadurch gekennzeichnet, dass** am Flächenelement (28) je Haltesystem ein erstes Befestigungstrapez (40) angeordnet ist, welches eine schräg zur Trittfläche (30) verlaufende erste Befestigungsseite (42) aufweist, an der die beiden Hebel (36) des Haltesystems nebeneinander angelenkt sind.

9. Türsystem (20) nach Anspruch 8, **dadurch gekennzeichnet, dass** fahrzeugseitig je Haltesystem ein zweites Befestigungstrapez (44) angeordnet ist, welches eine schräg zur ausgeklappten Trittfläche (30) verlaufende zweite Befestigungsseite (46) aufweist, an der die beiden anderen Hebel (34) des Haltesystems nebeneinander angelenkt sind.

10. Türsystem (20) nach Anspruch 9, **dadurch gekennzeichnet, dass** die ersten und zweiten Befestigungsseiten (42, 46) im eingeklappten Zustand der Klappstufe (26) einen Winkel von 60° bis 120°, vorzugsweise 90°, einschließen.

11. Türsystem (20) nach einem der Ansprüche 1 bis 10, **dadurch gekennzeichnet, dass** die Position des ausgeklappten Flächenelementes (28) über Einstellelemente in X-, Y-, und Z-Richtung veränderbar ist.

12. Türsystem (20) nach Anspruch 11, **dadurch gekennzeichnet, dass** die Einstellelemente durch die Haltesysteme gebildet sind.

13. Türsystem (20) nach Anspruch 11 oder 12, **dadurch gekennzeichnet, dass** eine Höhendifferenz des ausgeklappten Flächenelementes (28) in Bezug auf einen Fahrzeugboden innerhalb des Fahrzeugs (22) über unterschiedliche Winkel der Hebel (34, 36) der Haltesysteme zueinander und/oder zum Fahrzeug (22) veränderbar ist.

14. Türsystem (20) nach einem der Ansprüche 1 bis 13, **dadurch gekennzeichnet, dass** das Flächenelement (28) im eingeklappten Zustand als Verschlusselement wirkt und den Türflügel (24) in einer Türöffnung verschließt.

15. Türsystem (20) nach Anspruch 14, **dadurch gekennzeichnet, dass** das Flächenelement (28) im eingeklappten Zustand an einer Außenseite an einem weiteren flächigen Türelement (32) anliegt und somit das weitere flächige Türelement (32) in einer Öffnungsrichtung blockiert.
